(19) Europäisches Patentamt
European Patent Office
Office européen des brevets

(11) EP 0 594 218 B1

(12) **EUROPEAN PATENT SPECIFICATION**

(45) Date of publication and mention of the grant of the patent:
**17.03.1999 Bulletin 1999/11**

(51) Int Cl.[6]: **C08F 4/642**, C08F 10/00

(21) Application number: **93117875.0**

(22) Date of filing: **24.09.1987**

(54) **Process for polymerizing olefins**
Verfahren zur Olefinpolymerisation
Procédé de polymérisation d’oléfines

(84) Designated Contracting States:
**AT DE FR GB IT NL**

(30) Priority: **24.09.1986 JP 223781/86**
**01.10.1986 JP 231242/86**
**01.10.1986 JP 231243/86**
**11.12.1986 JP 293446/86**

(43) Date of publication of application:
**27.04.1994 Bulletin 1994/17**

(60) Divisional application: **97116335.7 / 0 812 862**

(62) Document number(s) of the earlier application(s) in accordance with Art. 76 EPC:
**90115128.2 / 0 406 912**
**87906209.9 / 0 287 666**

(73) Proprietor: **MITSUI CHEMICALS, INC.**
**Tokyo (JP)**

(72) Inventors:
- **Tsutsui, Toshiyuki**
**Ohtake-shi, Hiroshima 739-06 (JP)**
- **Toyota, Akinori**
**Iwakuni-shi, Yamaguchi 740 (JP)**
- **Kashiwa, Norio**
**Yamaguchi-ken 740 (JP)**

(74) Representative: **Cresswell, Thomas Anthony et al**
**J.A. KEMP & CO.**
**14 South Square**
**Gray’s Inn**
**London WC1R 5LX (GB)**

(56) References cited:
**US-A- 4 552 859**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 594 218 B1

## Description

This invention relates to a process for polymerizing olefins. More specifically, it relates to a process for producing an olefin polymer of a narrow molecular weight distribution by polymerizing an olefin with a catalyst showing excellent polymerization activity using a small amount of an aluminoxane, which when applied to the copolymerization of at least two olefins, can give a copolymer having a narrow molecular weight distribution and a narrow composition distribution.

For the production of an alpha-olefin polymer, particularly an ethylene polymer or an ethylene/alpha-olefin copolymer, methods have previously been known in which ethylene is polymerized, or ethylene and an alpha-olefin are copolymerized, in the presence of a titanium-containing catalyst comprising a titanium compound and an organoaluminum compound or a vanadium-containing catalyst comprising a vanadium compound and an organoaluminum compound. Generally, ethylene/alpha-olefin copolymers obtained with titanium-type catalysts have a broad molecular weight distribution and a broad composition distribution and inferior transparency, surface non-adhesiveness, and mechanical properties. Ethylene/alpha-olefin copolymers obtained with vanadium-type catalysts have a narrower molecular weight distribution and a narrower composition distribution and are considerably improved in transparency, surface non-adhesiveness, and mechanical properties, but are still insufficient for uses which require these properties. Accordingly, alpha-olefin polymers, especially ethylene/alpha-olefin copolymers, improved in these properties are required.

On the other hand, catalysts comprising a zirconium compound and an aluminoxane have been proposed recently as a new type of Ziegler catalyst for olefin polymerization.

Japanese Laid-Open Patent Publication No. 19309/1983 discloses a process which comprises polymerizing ethylene and at least one alpha-olefin having 3 to 12 carbon atoms at a temperature of -50 °C to 200 °C in the presence of a catalyst composed of a transition metal-containing catalyst represented by the following formula

$$(\text{cyclopentadienyl})_2\text{MeR}^1\text{Hal}$$

wherein $R^1$ represents cyclopentadienyl, $C_1$-$C_8$ alkyl or halogen, Me represents a transition metal, and Hal represents halogen,

with a linear aluminoxane represented by the following formula

$$Al_2OR^2{}_4(Al(R^2)\text{-}O)_n$$

wherein $R^2$ represents methyl or ethyl, and n is a number of 4 to 20,

or a cyclic aluminoxane represented by the following formula

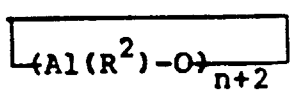

wherein $R^2$ and n are as defined above.

This patent document states that in order to adjust the density of the resulting polyethylene, ethylene should be polymerized in the presence of a small amount (up to 10 % by weight) of a slightly long-chain alpha-olefin or a mixture thereof.

Japanese Laid-Open Patennt Publication No. 95292/1984 describes an invention relating to a process for producing a linear aluminoxane represented by the following formula

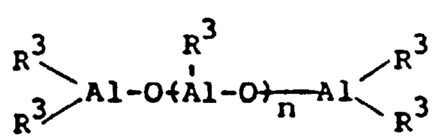

wherein n is 2 to 40 and $R^3$ is $C_1$-$C_8$ alkyl, and a cyclic aluminoxane represented by the following formula

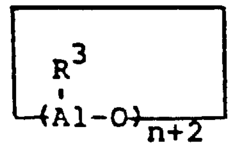

wherein n and $R^3$ are as defined above.

This Publication states that when an olefin is polymerized using a mixture of methylaluminoxane produced by the above process with a bis(cyclopentadienyl) compound of titanium or zirconium, polyethylene is obtained in an amount of at least 25 million grams per gram of the transition metal per hour.

Japanese Laid-Open Patent Publication No. 35005/1985 discloses a process for producing a catalyst for polymerization of olefins, which comprises reacting an aluminoxane compound represented by the following formula

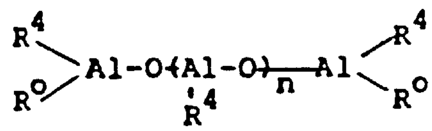

wherein $R^4$ represents $C_1$-$C_{10}$ alkyl, and $R^o$ is $R^4$ or is bonded to represent -O-,

with a magnesium compound, then chlorinating the reaction product, and treating the chlorinated product with a compound of Ti, V, Zr or Cr. The above Publication describes that the above catalyst is especially suitable for the copolymerization of ethylene with a $C_3$-$C_{12}$ alpha-olefin mixture.

Japanese Laid-Open Patent Publication No. 35006/1985 discloses a combination of (a) a mono-, di- or tricyclopentadienyl compound of at least two different transition metals or its derivative with (b) alumoxane (aluminoxane) as a catalyst system for polymers blended in a reactor. Example 1 of this Publication discloses that polyethylene having a number average molecular weight of 15,300 and a weight average molecular weight of 36,400 and containing 3.4 % of a propylene component was obtained by polymerizing ethylene and propylene using bis(pentamethylcyclopentadienyl) dimethyl zirconium and alumoxane as a catalyst. In Example 2 of this Publication, a blend of polyethylene and an ethylene/propylene copolymer having a number average molecular weight of 2,000, a weight average molecular weight of 8,300 and a propylene component content of 7.1 mole % and consisting of a toluene-soluble portion having a number average molecular weight of 2,200, a weight average molecular weight of 11,900 and a propylene component content of 30 mole % and a toluene-insoluble portion having a number average molecular weight of 3,000, a weight average molecular weight of 7,400 and a propylene component content of 4.8 mole % was obtained by polymerizing ethylene and propylene using bis(pentamethylcyclopentadienyl)zirconium dichloride, bis(methylcyclopentadienyl)zirconium dichloride and alumoxane as a catalyst. Likewise, Example 3 of this Publication describes a blend of LLDPE and an ethylene/propylene copolymer composed of a soluble portion having a molecular weight distribution ($\overline{M}w/\overline{M}n$) of 4.57 and a propylene component content of 20.6 mole % and an insoluble portion having a molecular weight distribution of 3.04 and a propylene component content of 2.9 mole %.

Japanese Laid-Open Patent Publication No. 35007/1985 describes a process which comprises polymerizing ethylene alone or with an alpha-olefin having at least 3 carbon atoms in the presence of a catalyst system comprising metallocene and a cyclic alumoxane represented by the following formula

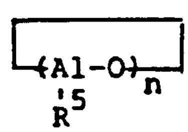

wherein $R^5$ represents an alkyl group having 1 to 5 carbon atoms, and n is an integer of 1 to about 20,

or a linear alumoxane represented by the following formula

$$R^5\!\left(\underset{R^5}{\underset{|}{Al}}-O\right)_n AlR^5_2$$

wherein $R^5$ and n are as defined above.

The Publication describes that the polymer obtained by the above process has a weight average molecular weight of about 500 to about 1,400,000 and a molecular weight distribution of 1.5 to 4.0.

Japanese Laid-Open Patent Publication No. 35008/1985 describes that polyethylene or a copolymer of ethylene and a $C_3$-$C_{10}$ alpha-olefin having a wide molecular weight distribution is produced by using a catalyst system comprising at least two types of metallocenes and alumoxane. The Publication states that the above copolymer has a molecular weight distribution ($\bar{M}w/\bar{M}n$) of 2 to 50.

These catalysts formed from transition metal compounds and aluminoxanes have much higher polymerization activity than the catalyst systems known heretofore.

On the other hand, methods using catalysts formed from solid catalyst components composed of the above transition metal compounds supported on porous inorganic oxide carriers such as silica, silica-alumina and alumina and aluminoxanes are proposed in Japanese Laid-Open Patent Publications Nos. 35006/1985, 35007/1985 and 35008/1985 which are cited above. Japanese Laid-Open Patent Publications Nos. 31404/1986, 108610/1986 and 106808/1985 propose methods using solid catalyst components supported on similar porous inorganic oxide carriers.

Furthermore, Japanese Laid-Open Patent Publications Nos. 260602/1985 and 130604/1985 propose a process for polymerizing olefins using catalysts formed from a transition metal compound and a mixed organoaluminum compound composed of an aluminoxane and an organoaluminum compound.

Japanese Laid-Open Patent Publication No. 260602/1985 discloses a process for producing a polyolefin by polymerizing an olefin using

(1) as the transition metal compound, a compound of the following formula

$$(Cp)MR^6R^7R^8$$

wherein Cp is cyclopentadienyl, M is Ti, V, Zr or Hf, and each of $R^6$, $R^7$ and $R^8$ represents $C_1$-$C_6$ alkyl, cyclopentadienyl, halogen or hydrogen, and

(2) as the organoaluminum compounds,

(2)-1 an aluminoxane synthesized from a trialkylaluminum and water and

(2)-2 a compound of the following formula

$$R^9_nAlX_{3-n}$$

wherein $R^9$ is $C_1$-$C_{10}$ alkyl, cycloalkyl or aryl, X is halogen, and n is a number of 1 to 3.

This Laid-Open Patent Publication gives a working example in which ethylene is polymerized in a system comprising 3 millimoles of the aluminoxane, 3 millimoles of triethyl-aluminum and 0.003 millimole of bis(cyclopentadienyl)zirconium chloride in 400 ml of toluene as a polymerization medium.

Japanese Laid-Open Patent Publication No. 130604/1985 discloses a process for producing a polyolefin by polymerizing an olefin using a catalyst composed of, as main components,

(1) a transition metal compound of the following formula

$$(Cp)_2MR^{10}R^{11}$$

wherein Cp is cyclopentadienyl, M is Ti, Zr or Hf, and each of $R^{10}$ and $R^{11}$ is H, halogen, $C_1$-$C_6$ alkyl or cyclopentadienyl,

(2) an aluminoxane obtained by reacting a dialkyl monohalide of the formula

$$AlR^{12}_2X^1$$

wherein $R^{12}$ is methyl or ethyl, and $X^1$ is halogen,
with water, and
(3) an organoaluminum compound represented by the following formula

$$AlR^{13}_mX^2_{3-m}$$

wherein $R^{13}$ is $C_1$-$C_{10}$ alkyl or cycloalkyl, $X^2$ is halogen, and m is a number of 1 to 3.

This Laid-Open Patent Publication gives examples of the amounts of the aluminoxane used per 400 ml of toluene as a polymerization medium, 4.5 millimoles (Examples 1-4 and 8), 3.6 millimoles (Example 5), 3.25 millimoles (Example 6), 10.0 millimoles (Example 7) and 9.0 millimoles (Example 9).

This invention seeks to provide a process for producing an alpha-olefin polymer having a narrow molecular weight distribution and a copolymer of alpha-olefins having narrow molecular weight distribution and a narrow composition distribution when applied to the copolymerization of at least two olefins, especially a high-molecular-weight ethylene/alpha-olefin copolymer having a narrow molecular weight distribution and a narrow composition distribution, with excellent polymerization activity using a small amount of an aluminoxane.

The invention also relates to a process for producing an olefin polymer having excellent powder properties and a narrow molecular weight distribution, and an olefin copolymer having a narrow molecular weight distribution and a narrow composition distribution when applied to the copolymerization of at least two olefins, especially an ethylene polymer or an ethylene/alpha-olefin copolymer having excellent powder properties and a narrow molecular weight distribution and/or a narrow composition distribution.

According to the invention there is provided a process for polymerizing olefins, which comprises polymerizing or copolymerizing olefins in the presence of a catalyst composed of

(A) a solid catalyst component composed of a compound of a transition metal which compound is represented by formula (I)

$$R^1_kR^2_\ell R^3_mR^4_nMe \qquad (I)$$

wherein $R^1$ represents a cycloalkadienyl group, $R^2$, $R^3$ and $R^4$ are identical or different and each represents a cycloalkadienyl group, an aryl group, an alkyl group, an aralkyl group, a halogen atom or a hydrogen atom, Me represents zirconium, titanium or hafnium, k is $\ell$, 2, 3, or 4, $\ell$, m and n are each 0, 1, 2 or 3, and $k+\ell+m+n=4$, and which compound is not supported on an inorganic carrier,
(B) an aluminoxane in a concentration of not ore than 3 milligram-atoms/litre as aluminum atom in the reaction system, and
(C) an organoaluminium compound having a hydrocarbon group other than n-alkyl groups.

The catalyst in accordance with this invention is formed of the solid catalyst component (A), the aluminoxane (B) and the organoaluminum compound (C) having a hydrocarbon group other than n-alkyl groups. The catalyst component (A) is a solid catalyst component composed of a compound of a transition metal which is represented by formula (I)

$$R^1_kR^2_\ell R^3_mR^4_nMe \qquad (I)$$

wherein $R^1$ represents a cycloalkadienyl group, $R^2$, $R^3$ and $R^4$ are identical or different and each represents a cycloalkadienyl group, an aryl group, an alkyl group, a cycloalkyl group, an aralkyl group, a halogen atom or a hydrogen atom, Me represents zirconium, titanium or hafnium, k is 1, 2, 3, or 4, $\ell$, m and n are each 0, 1, 2 or 3, and $k+\ell+m+n=4$.

The transition metal of Group IVB (Me) of the periodic table in the catalyst component (A) is preferably titanium or zirconium. Zirconium is especially preferred.

Examples of the cycloalkadienyl group represented by $R^1$ are a cyclopentadienyl group, a methylcyclopentadienyl group, an ethylcyclopentadienyl group, a dimethylcyclopentadienyl group, an indenyl group and a tetrahydroindenyl group. Examples of the cycloalkadienyl group represented by $R^2$, $R^3$ and $R^4$ may be the same as above.

The aryl group represented by $R^2$, $R^3$ and $R^4$ is preferably a phenyl or tolyl group, for example.

Likewise, preferred examples of the aralkyl group are benzyl and neophile groups.

Examples of preferred alkyl groups are methyl, ethyl, propyl, isopropyl, butyl, hexyl, octyl, 2-ethylhexyl, decyl and oleyl groups.

Preferably, the cycloalkyl group may be, for example, a cyclopentyl, cyclohexyl, cyclooctyl, or norbornyl group.

The halogen atom may be, for example, fluorine, chlorine or bromine.

Examples of zirconium compounds corresponding to formula (I) in which Me is zirconium are listed below.

bis(Cyclopentadienyl)zirconium monochloride monohydride,
bis(cyclopentadienyl)zirconium monobromide monohydride,
bis(cyclopentadienyl)methylzirconium hydride,
bis(cyclopentadienyl)ethylzirconium hydride,
bis(cyclopentadienyl)cyclohexylzirconium hydride,
bis(cyclopentadienyl)phenylzirconium hydride,
bis(cyclopentadienyl)benzylzirconium hydride,
bis(cyclopentadienyl)neopentylzirconium hydride,
bis(methylcyclopentadienyl)zirconium monochloride monohydride,
bis(indenyl)zirconium monochloride monohydride,
bis(cyclopentadienyl)zirconium dichloride,
bis(cyclopentadienyl)zirconium dibromide,
bis(cyclopentadienyl)methylzirconium monochloride,
bis(cyclopentadienyl)ethylzirconium monochloride,
bis(cyclopentadienyl)cyclohexylzirconium monochloride,
bis(cyclopentadienyl)phenylzirconium monochloride,
bis(cyclopentadienyl)benzylzirconium monochloride,
bis(methylcyclopentadienyl)zirconium dichloride,
bis(indenyl)zirconium dichloride,
bis(indenyl)zirconium dibromide,
bis(cyclopentadienyl)diphenylzirconium,
bis(cyclopentadienyl)dibenzylzirconium,
ethylenebis(indenyl)dimethylzirconium,
ethylenebis(indenyl)diethylzirconium,
ethylenebis(indenyl)dibenzylzirconium,
ethylenebis(indenyl)methylzirconium monobromide,
ethylenebis(indenyl)ethylzirconium monochloride,
ethylenebis(indenyl)benzylzirconium monochloride,
ethylenebis(indenyl)methylzirconium monochloride,
ethylenebis(indenyl)zirconium dichloride,
ethylenebis(indenyl)zirconium dibromide,
ethylenebis(4,5,6,7-tetrahydro-1-indenyl)dimethylzirconium,
ethylenebis(4,5,6,7-tetrahydro-1-indenyl)methylzirconium monochloride,
ethylenebis(4,5,6,7-tetrahydro-1-indenyl)zirconium dichloride,
ethylenebis(4,5,6,7-tetrahydro-1-indenyl)zirconium dibromide,
ethylenebis(4-methyl-1-indenyl)zirconium dichloride,
ethylenebis(5-methyl-1-indenyl)zirconium dichloride,
ethylenebis(6-methyl-1-indenyl)zirconium dichloride,
ethylenebis(7-methyl-1-indenyl)zirconium dichloride,
ethylenebis(5-methoxy-1-indenyl)zirconium dichloride,
ethylenebis(2,3-dimethyl-1-indenyl)zirconium dichloride,
ethylenebis(4,7-dimethyl-1-indenyl)zirconium dichloride and
ethylenebis(4,7-dimethoxy-1-indenyl)zirconium dichloride.

Examples of titanium compounds corresponding to formula (I) in which He is titanium are listed below.

bis(Cyclopentadienyl)titanium monochloride monohydride,
bis(cyclopentadienyl)methyltitanium hydride,
bis(cyclopentadienyl)phenyltitanium chloride,

bis(cyclopentadienyl)benzyltitanium chloride,
bis(cyclopentadienyl)titanium chloride,
bis(cyclopentadienyl)dibenzyltitanium,
ethylenebis(indenyl)titanium dichloride, and
ethylenebis(4,5,6,7-tetrahydro-1-indenyl)titanium dichloride.

Examples of hafnium compounds corresponding to formula (I) in which Me is hafnium are listed below.

bis(Cyclopentadienyl)hafnium monochloride monohydride,
bis(cyclopentadienyl)ethylhafnium hydride,
bis(cyclopentadienyl)phenylhafnium chloride,
bis(cyclopentadienyl)hafnium dichloride,
bis(cyclopentadienyl)dibenzylhafnium,
ethylenebis(indenyl)hafnium dichloride, and
ethylenebis(4,5,6,7-tetrahydro-1-indenyl)-hafnium dichloride

Investigations of the present inventors have also shown that by limiting the amount of the aluminoxane used to not more than 3 milligram-atoms/liter as Al atom in the catalyst system composed of the components (A), (B) and (C), excellent catalytic activity can be exhibited.

On the basis of this fact, it has been found that when the amount of the aluminoxane used is limited to not more than 3 milligram-atoms/liter as Al atom in the reaction system, the use of any of the compounds of formula (I) as the transition metal compounds without being supported on an inorganic carrier can exhibit excellent activity.

In the catalyst component (A), the transition metal compound may be treated with an organic metal compound or a halogen-containing silicon compound. The organic metal compound may be, for example, an organoaluminum compound, an organoboron compound, an organomagnesium compound, an organozinc compound or an organolithium compound. The organoaluminum compound is preferred.

Examples of the organoaluminum compound include trialkylaluminums such as trimethylaluminum, triethylaluminum and tributylaluminum; alkenylaluminums such as isoprenylaluminum; dialkyl aluminum alkoxides such as dimethyl aluminum methoxide, diethyl aluminum ethoxide and dibutyl aluminum butoxide; alkyl aluminum sesquialkoxides such as methyl aluminum sesquimethoxide and ethyl aluminum sesquiethoxide; partially alkoxylated alkylaluminums having an average composition of the formula $R^1_{2.5}Al(OR^2)_{0.5}$; dialkyl aluminum halides such as dimethyl aluminum chloride, diethyl aluminum chloride and dimethyl aluminum bromide; alkyl aluminum sesquihalides such as methyl aluminum sesquichloride and ethyl aluminum sesquichloride; partially halogenated alkyaluminums, for example alkyl aluminum dihalides such as methyl aluminum dichloride and ethyl aluminum dichloride.

The trialkylaluminums and dialkyl aluminum chlorides are preferred, and above all trimethylaluminum, triethylaluminum and dimethyl aluminum chloride are preferred.

Triethylboron is a preferred example of the organoboron compound.

Examples of the organomagnesium compound are ethylbutylmagnesium, di-n-hexylmagnesium, ethyl magnesium bromide, phenyl magnesium bromide and benzyl magnesium chloride.

Diethylzinc is a preferred example of the organozinc compound.

Methyllithium, butyllithium and phenyllithium are examples of the organolithium compound.

As the halogen-containing silicon compound as a treating agent, compounds of the following formula (IV)

$$SiY_dR^5_e(OR^6)_{4-d-e} \qquad (IV)$$

wherein Y is a chlorine or bromine atom, $R^5$ and $R^6$, independently from each other, represent an alkyl group having 1 to 12 carbon atoms, an aryl group, or a cycloalkyl group having 3 to 12 carbon atom, $\underline{d}$ is a number of 1 to 4 and $\underline{e}$ is a number of 0 to 4, provided that the sum of $\underline{d}$ and $\underline{e}$ is a number of 1 to 4,
are preferably used.

Examples of such compounds include silicon tetrachloride, silicon tetrabromide, silicon trichloride, methylsilicon trichloride, ethylsilicon trichloride, propylsilicon trichloride, phenylsilicon trichloride, cyclohexylsilicon trichloride, silicon tribromide, ethylsilicon tribromide, dimethylsilicon dichloride, methylsilicon dichloride, phenylsilicon dichloride, methoxysilicon trichloride, ethoxysilicon trichloride, propoxysilicon trichloride, phenoxysilicon trichloride, ethoxysilicon tribromide, methoxysilicon dichloride, dinethoxysilicon dichloride, and silanol trichloride. These compounds may be used singly or in combination. Among them, silicon tetrachloride, silicon trichloride and methylsilicon trichloride are preferred.

The mixing ratio of the organometallic compound to the inorganic carrier in the above treatment, as the ratio of the amount of the organometallic compound in millimoles/the amount of the carrier in grams, is from 0.5 to 50, preferably from 1 to 30, more preferably from 1.5 to 20.

The catalyst component (B) is an aluminoxane. The aluminoxane used as the catalyst component is, for example, an organoaluminum compound of the following formula (II)

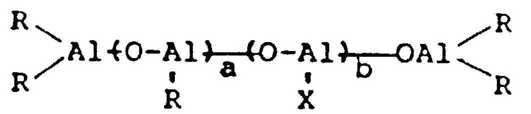

(II)

wherein R is a hydrocarbon group, X is a halogen atom, and a and b, independently from each other, represent a number of 0 to 80 with the proviso that a and b are not simultaneously zero (in this formula, the degree of polymerization is a+b+2),
or the following formula (III)

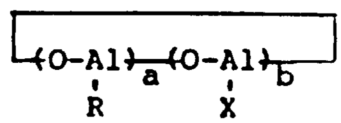

(III)

wherein R, X, a and b are as defined hereinabove with regard to formula (II) (in this formula, the degree of polymerization is a+b).

In formulae (II) and (III), R represents a hydrocarbon group such as an alkyl, cycloalkyl, aryl or aralkyl group. Preferred as the alkyl group are lower alkyl groups such as a methyl, ethyl, propyl or butyl group. Cyclopentyl and cyclohexyl groups are preferred examples of the cycloalkyl group. Preferred aryl groups are, for example, phenyl and tolyl groups. Preferably, the aralkyl group is, for example, a benzyl or neophile group. Of these, the alkyl groups are especially preferred.

X is a halogen atom such as fluorine, chlorine, bromine and iodine. Chlorine is especially preferred.

a and b, independently from each other, are numbers of 0 to 80, with the proviso that a and b are not simultaneously zero.

When b is 0, formula (II) may be written as the following formula (II)-1

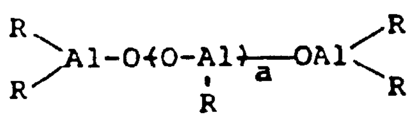

(II)-1

wherein R and a are as defined above,
and formula (III) may be written as the following formula (III)-1

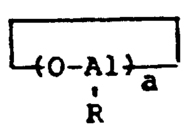

(III)-1

wherein R and a are as defined above.

In formula (II)-1, a is preferably 2 to 50, more preferably 4 to 30. Furthermore, in formula (III)-1, a is preferably 4 to 52, more preferably 6 to 32.

a is preferably 0 to 40, more preferably 3 to 30, and b is preferably 1 to 40, more preferably 3 to 30.

The value of a+b is preferably 4 to 50, more preferably 8 to 30.
In formulae (II) and (III), the two units

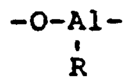 and 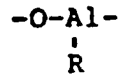

may be bonded in blocks or at random.
When a is 0 in formulae (II) and (III), it is desirable to use an organoaluminum compound of the following formula (V)

$$AlR^7_f Z_{3-f} \qquad (V)$$

wherein $R^7$ is an alkyl group having 1 to 10 carbon atoms or a cycloalkyl group having 3 to 12 carbon atoms, Z is a halogen atom, and f is a number of 1 to 3,
together with the halogenated aluminoxane. Examples of such an organoaluminum compound include trimethylaluminum, triethylaluminum, tributylaluminum trihexylaluminum, diethylaluminum chloride and ethylaluminum sesquichloride.
Preferably, the halogenated aluminoxane and the organoaluminum compound are used at this time such that the amount of the organoaluminum compound is 0.1 to 10 moles, preferably 0.3 to 3.0 moles, especially preferably 0.5 to 2.0 mole, per mole of Al atom in the halogenated aluminoxane.
The aluminoxane or the halogenated aluminoxane described above can be produced, for example, by the following methods.

(1) A method which comprises suspending a compound containing water of adsorption or a salt containing water of crystallization, such as magnesium chloride hydrate, nickel sulfate hydrate or cerous chloride hydrate in a medium such as benzene, toluene, ethyl ether or tetrahydrofuran, and reacting it with a trialkylaluminum and/or a dialkylaluminum monohalide.
(2) A method which comprises reacting a trialkylaluminum and/or a dialkylaluminum monohalide directly with water in a medium such as benzene, toluene, ethyl ether or tetrahydrofuran.

It is preferred to adopt the method (1). Incidentally, the aluminoxane may contain a small amount of an organometallic compound.
Then catalyst component (C) is an organoaluminum compound having a hydrocarbon group other than n-alkyl groups. Such a hydrocarbon group may be, for example, an alkyl group having a branched chain such as an isoalkyl group, a cycloalkyl group and an aryl group. Examples of the above organoaluminum compound are trialkylaluminums such as triisopropylaluminum, triisobutylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum; tricycloalkylaluminums such as tricyclohexylaluminum; triarylaluminums such as triphenylaluminum and tritolylaluminum; dialkylaluminum hydrides such as diisobutylaluminum hydride; and alkylaluminum alkoxides such as isobutylaluminum methoxide, isobutylaluminum ethoxide and isobutylaluminum isopropoxide. Of these organoaluminum compounds, organoaluminum compounds having a branched alkyl group are preferred, and the trialkylaluminums are especially preferred. Furthermore, isoprenylaluminums having the general formula $(i\text{-}C_4C_9)_xAl_y(C_5H_{10})_z$ wherein x, y and z are positive numbers and $z \geqq 2x$ are also preferably used. There can also be used compounds which will yield the above organoaluminum compounds in the polymerization system, for example a combination of an aluminum halide and an alkyllithium or a combination of an aluminum halide and an alkylmagnesium, may also be used.
In the process of this invention, the polymerization of olefins may be carried out by a liquid-phase polymerization method (e.g., slurry polymerization or solution polymerization) or a gas-phase polymerization method. Prior to the olefin polymerization, prepolymerization may be carried out using a small amount of an olefin.
The prepolymerization is carried out (1) in the absence of solvent, or (2) in an inert hydrocarbon medium. Of these, the method (1) is preferred. Desirably, at this time, the catalyst components (A) and (B) are mixed in an inert hydrocarbon medium, and the solvent is removed by using an evaporator at room temperature or an elevated temperature under atmospheric or reduced pressure. The mole ratio of the transition metal atom in catalyst component (A) to the aluminum atom in catalyst component (B) in the prepolymerization treatment (Al/the transition metal atom) is

from 20 to 5000, preferably from 25 to 2000, more preferably from 30 to 1000. The prepolymerization temperature is from -20 °C to 70 °C, preferably -10 °C to 60 °C, more preferably 0 °C to 50 °C.

The treatment may be carried out either batch-wise or continuously under reduced, atmospheric or elevated pressure. The prepolymerization may be carried out in the presence of a molecular weight controlling agent such as hydrogen, but it is preferred to limit its amount at least to one sufficient to produce a prepolymer having an intrinsic viscosity [η], measured in decalin at 135 °C, of at least 0.2 dl/g, preferably 0.5 to 20 dl/g.

The amount of the transition metal compound (A) at the time of performing the process of this invention by the slurry polymerization technique or the gas-phase polymerization technique is, in terms of the concentration of the transition metal atom in the polymerization reaction system, $10^{-8}$ to $10^{-2}$ gram-atom/liter, preferably $10^{-7}$ to $10^{-3}$ gram-atom/liter.

In the process of this invention, the amount of the aluminoxane (B), calculated as the aluminum atom in the reaction system, is not more than 3 milligram-atoms/ liter, preferably 0.1 to 2.5 milligram-atoms/liter, especially preferably 0.2 to 2 milligram-atoms/liter. The proportion of the aluminum atoms of the aluminoxane component (B) based on the total amount of the aluminum atoms in the aluminoxane component (B) and the organoaluminum compound component (C) is usually 20 to 80 %, preferably 25 to 75 mole %, and especially preferably 30 to 70 %. Corresponding to this amount, the proportion of the aluminum atom in the organoaluminum compound component (C) is usually 20 to 80 %, preferably 25 to 75 %, especially preferably 30 to 70 %. In the process of this invention, the ratio of the total amount of aluminum atoms in the aluminoxane component (B) and the organoaluminum compound component (C) to the transition metal atom in the reaction system is usually from 20 to 10000, preferably from 50 to 5000, especially preferably from 100 to 2000.

According to the above catalyst in accordance with this invention, olefins can be polymerized or copolymerized advantageously.

In the process of this invention, the catalyst components (A), (B) and (C) may be separately fed into the reaction system. Or it is possible to add a premixture of any two of the above compounds and the remaining one catalyst component separately into the reaction system. Alternatively, all the catalyst components may be pre-mixed and then fed into the reaction system. When two catalyst components are to be mixed in advance, the catalyst components to be mixed are preferably the catalyst components (A) and (B).

In the premixing of the catalyst components (A) and (B), the concentration of the transition metal atom is usually 2.5 x $10^{-4}$ to 1.5 x $10^{-1}$ gram-atom/liter, preferably 5.0 x $10^{-4}$ to 1.0 x $10^{-1}$ gram-atom/liter. The concentration of the aluminoxane is usually 0.05 to 5 gram-atoms/liter, preferably 0.1 to 3 gram-atoms/liter, as Al atom. The temperature in the premixing is usually -50 °C to 100 °C, and the mixing time is usually 0.1 minute to 50 hours.

All the catalysts described above can be used advantageously in the homopolymerization or copolymerization of olefins. They are especially effective for the production of an ethylene polymer and ethylene/alphaolefin copolymers. Examples of the olefins that can be utilized are ethylene and alpha-olefins having 3 to 20 carbon atoms, such as propylene, 1-butene, 1-hexene, 4-methyl-1-pentene, 1-octene, 1-decene, 1-dodecene, 1-tetradecene, 1-hexadecene, 1-octadecene and 1-eicocene.

The polymerization of olefins by the process of this invention is usually carried out in a gas-phase or in a liquid phase, for example in slurry. In the slurry polymerization, an inert hydrocarbon may be used as a solvent. It is also possible to use an olefin itself as the solvent.

Specific examples of the hydrocarbon solvent are aliphatic hydrocarbons such as butane, isobutane, pentane, hexane, octane, decane, dodecane, hexadecane and octadecane; alicyclic hydrocarbons such as cyclopentane, methylcyclopentane, cyclohexane and cyclooctane, aromatic hydrocarbons such as benzene, toluene and xylene, and petroleum fractions such as gasoline, kerosene and light oil. Of these hydrocarbon media, the aliphatic hydrocarbons, alicyclic hydrocarbons and petroleum fractions are preferred.

When slurry polymerization is carried out in the process of this invention, the polymerization temperature is usually -50 to 120 °C, preferably 0 to 100 °C.

When slurry polymerization or gas-phase polymerization is carried out by the process of this invention, the proportion of the transition metal compound is usually $10^{-8}$ to $10^{-2}$ gram-atom/liter, preferably $10^{-7}$ to $10^{-3}$ gram-atom/ liter as the transition metal atom in the polymerization system.

In the present polymerization reaction, the aluminoxane may, or may not, be used additionally. To obtain a polymer having excellent powder properties, it is preferred not to use the aluminoxane additionally.

The polymerization pressure is usually atmospheric pressure to 10 MPa (100 kg/cm$^2$), preferably 0.2 to 5 MPa (2 to 50 kg/cm$^2$). The polymerization may be carried out batchwise, semi-continuously or continuously.

The polymerization may be carried out in two or more stages having different reaction conditions.

When the slurry polymerization method or the gas-phase polymerization method is used to polymerize olefins, particularly ethylene or ethylene with an alpha-olefin in this invention, there is no polymer adhesion to the reactor and the resulting polymer has excellent powder properties and a narrow molecular weight distribution. When the invention is applied to the copolymerization of at least two olefins, an olefin copolymer having a narrow molecular weight distribution and a narrow composition distribution can be obtained.

[EXAMPLES]

The process of this invention will now be specifically illustrated by the following examples. The $\overline{M}w/\overline{M}n$ value was measured by the following procedure in accordance with Takeuchi, "Gel Permeation Chromatography", published by Maruzen Co., Ltd.

(1) By using standard polystyrene of a known molecular weight (monodisperse polystyrene produced by Toyo Soda Co., Ltd.), the molecular weight M and its GPC (gel permeation chromatograph) count are measured. A calibration curve of the molecular weight M versus EV (elution volume) is prepared. The concentration at this time is adjusted to 0.02 % by weight.

(2) The GPC chromatogram of the sample is taken by GPC, and the number average molecular weight $\overline{M}n$ and the weight average molecular weight $\overline{M}w$ of the sample are calculated as polyethylene by the procedure (1) above, and the $\overline{M}w/\overline{M}n$ value is determined. The sample preparation conditions and the GPC measurement conditions at this time are as follows:-

Sample preparation:

(a) Take the sample together with o-dichlorobenzene solvent in an Erlenmeyer flask so that its concentration is 0.1 % by weight.

(b) Heat the flask to 140 °C and stir the contents for about 30 minutes to dissolve the sample.

(c) Subject the filtrate from it to GPC.

GPC measurement conditions:

(a) Device: 150C-ALC/GPC made by Waters Co.

(b) Column: GMH type made by Toyo Soda Co., Ltd.

(c) Amount of the sample: 400 microliters

(d) Temperature: 140 °C

(e) Flow rate: 1 ml/min.

The amount of an n-decane-soluble portion in the copolymer (as the amount of the soluble portion is smaller, the narrow is the composition distribution) was measured by adding about 3 g of the copolymer to 450 ml of n-decane, dissolving the copolymer at 145 °C, cooling the solution to 23 °C, removing the n-decane-insoluble portion by filtration, and recovering the n-decane-soluble portion from the filtrate.

The B value of the ethylenic copolymer of this invention is defined as follows:

$$B = \frac{P_{OE}}{2P_O \cdot P_E}$$

wherein $P_E$ represents the molar fraction of the ethylene component in the copolymer, $P_O$ represents the molar fraction of the alpha-olefin component, and $P_{OE}$ represents the molar fraction of the alpha-olefin/ethylene sequence in the total dyad sequence.

The B value is an index showing the state of distribution of the individual monomer components in the copolymer and is calculated by determining $P_E$, $P_O$ and $P_{OE}$ in the above definition in accordance with the papers of G. J. Ray [Macromolecules, 10, 773 (1977)], J. C. Randall [Macromolecules, 15, 353 (1982), J. Polymer Science, Polymer Physics Ed., 11, 275 (1973)], and K. Kimura [Polymer, 25, 441 (1984)]. As the B value is larger, the amount of block-like sequences is smaller and the distribution of ethylene and the alpha-olefin is more uniform. Thus, the copolymer has a narrower composition distribution.

The composition distribution B value is determined as follows: About 200 mg of the copolymer is uniformly dissolved in 1 ml of hexachlorobutadiene in a sample tube having a diameter of 10 mm, and a $^{13}C$-NMR spectrum of the sample is taken usually at a temperature of 120 °C under the following conditions.

Measuring frequency: 25.05 MHz

Spectral width: 1500 Hz
Filter width: 1500 Hz
Pulse repeating time: 4.2 sec
Pulse width: 7 microseconds
Number of integrations: 2000 to 5000

From the spectrum, $P_E$, $P_O$ and $P_{OE}$ are determined, and the B value is calculated from them.

EXAMPLE 1

Preparation of aluminoxane

A 400 ml flask purged fully with nitrogen was charged with 37 g of $Al_2(SO_4)_3.14H_2O$ and 125 ml of toluene. The flask was cooled to 0 °C, and 500 millimoles of trimethyl aluminum diluted with 125 ml of toluene was added dropwise. The mixture was heated to 40 °C, and the reaction was continued at this temperature for 10 hours. After the reaction, the reaction mixture was subjected to solid-liquid separation by filtration. Toluene was removed from the filtrate to give 13 g of aluminoxane as a white solid. It has a molecular weight, determined by freezing point depression in benzene, of 930. Its m value in the catalyst component [B] was 14.

Polymerization

Toluene (500 ml) was introduced into a 1-liter glass autoclave fully purged with nitrogen, and a gaseous mixture of ethylene and propylene (120 liters/hr, and 80 liters/hr, respectively) was passed through the flask and left to stand at 20 °C for 10 minutes. Then, 0.5 millimole of triisobutyl aluminum was added. Five minutes later, 0.25 milligram-atom, as aluminum atom, of the aluminoxane and subsequently 2.5 x $10^{-3}$ millimole of bis(cyclopentadienyl) zirconium dichloride were added, and the polymerization was started. The gaseous mixture of ethylene and propylene was continuously fed, and polymerized at 20 °C under atmospheric pressure for 1 hour. After the polymerization, a small amount of methanol was added to stop the polymerization. The polymer solution was poured into a large excess of methanol to precipitate the polymer. The precipitated polymer was dried at 130 °C under reduced pressure for 12 hours. There was consequently obtained 19.1 g of a polymer having an MFR of 0.31 g/min., an ethylene content, measured by $^{13}$C-NMR, of 84.1 mole %, an $\overline{M}w/\overline{M}n$ of 2.39 and a B value of 1.13.

COMPARATIVE EXAMPLE 1

Example 1 was repeated except that in the polymerization of Example 1, triisobutyl aluminum was not used. Hardly any polymer was obtained.

EXAMPLES 2-9 AND COMPARATIVE EXAMPLES 2-6

Polymerization was carried out under the conditions described in Table 1 by the same operation as in Example 1. The results are shown in Table 2.

EXAMPLE 10

Polymerization

A 2-liter stainless steel autoclave fully purged with nitrogen was charged with 250 ml of hexane and 750 ml of 4-methyl-1-pentene, and heated to 35 °C. Then, 0.25 millimole of triisobutyl aluminum, 0.5 milligram-atom, calculated as aluminum atom, of the aluminoxane synthesized in Example 1, and 1 x $10^{-3}$ millimole of bis(cyclopentadienyl)zirconium dichloride were introduced into the autoclave. Ethylene was subsequently introduced and the polymerization was started. Ethylene was continuously fed so as to maintain the total pressure at 7.8 bar-G (8 kg/cm$^2$-G); and polymerized at 45 °C for 1 hour. The subsequent operation was carried out in the same way as in Example 1 to give 33.1 g of a polymer having an MFR of 0.55 g/10 min., a density of 0.901 g/cm$^3$, an $\overline{M}w/\overline{M}n$ of 2.92 and a decane-soluble weight fraction at room temperature of 1.8 % by weight.

EXAMPLES 11-13 AND COMPARATIVE EXAMPLE 7

Polymerization was carried out under the conditions described in Table 3 by the same operation as in Example

10. The results are shown in Table 4.

Table 1

| | Transition metal compound (mmol/ℓ) | Aluminoxane (mmol/ℓ) | Alkyl aluminum | | Monomer 1 | | Monomer 2 | |
|---|---|---|---|---|---|---|---|---|
| | | | Type | (mmol/ℓ) | Type | (ℓ/hr) | Type | (ℓ/hr) |
| Example 1 | $5 \times 10^{-3}$ | 0.5 | $(i-Bu)_3Al$ | 1 | ethylene | 120 | propylene | 80 |
| " 2 | " | 1 | " | " | " | " | " | " |
| " 3 | " | 0.25 | " | " | " | " | " | " |
| " 4 | " | 0.5 | TMPAL* | " | " | " | " | " |
| " 5 | " | " | TEHAL** | " | " | " | " | " |
| " 6 | $2 \times 10^{-2}$ | " | $(i-Bu)_3Al$ | " | " | 30 | " | 160 |
| " 7 | " | " | " | " | - | - | " | 100 |
| " 8 | $5 \times 10^{-3}$ | " | isoprenyl aluminum | " | ethylene | 120 | " | 80 |
| " 9 | " | " | " | " | " | 100 | " | 100 |
| Comp. Example 1 | $5 \times 10^{-3}$ | 0.5 | - | - | ethylene | 120 | propylene | 80 |
| " 2 | " | 1 | - | - | " | " | " | " |
| " 3 | " | 0.5 | $Et_3Al$ | 1 | " | " | " | " |
| " 4 | " | " | $(n-Bu)_3Al$ | " | " | " | " | " |
| " 5 | " | " | $(n-C_6H_{13})_3Al$ | " | " | " | " | " |
| " 6 | " | " | $(n-C_8H_{17})_3Al$ | " | " | " | " | " |

* TMPAL; Tri(2-methylpentyl)aluminum
** TEHAL; Tri(2-ethylhexyl)aluminum

- to be continued -

Table 1 (continued)

| | Polymerization temperature (°C) | Polymerization time (hr) | Amount yielded (g) | Activity (g-polymer/mmol-Zr) |
|---|---|---|---|---|
| Example 1 | 20 | 1 | 19.1 | 7640 |
| " 2 | " | 0.5 | 23.8 | 9520 |
| " 3 | 30 | 1 | 7.7 | 3080 |
| " 4 | 20 | " | 18.4 | 7360 |
| " 5 | " | " | 18.7 | 7480 |
| " 6 | 40 | " | 5.9 | 590 |
| " 7 | 20 | 2 | 2.0 | 200 |
| " 8 | " | 1 | 10.3 | 4120 |
| " 9 | " | " | 9.4 | 3760 |
| Comp. Example 1 | 20 | 1 | trace | - |
| " 2 | " | 0.5 | 12.2 | 4880 |
| " 3 | " | 1 | trace | - |
| " 4 | " | " | 1.4 | 560 |
| " 5 | " | " | 1.4 | 560 |
| " 6 | " | " | 0.4 | 560 |

Table 2

| | MFR (g/10 min.) | Ethylene content (mol%) | $\bar{M}w/\bar{M}n$ | B value | [η]*(dl/g) |
|---|---|---|---|---|---|
| Example 1 | 0.31 | 84.1 | 2.39 | 1.13 | - |
| " 2 | 0.59 | 83.4 | 1.95 | 1.13 | - |
| " 3 | 0.20 | 85.2 | 2.32 | 1.12 | - |
| " 4 | 0.30 | 82.3 | 2.28 | 1.15 | - |
| " 5 | 0.26 | 80.5 | 2.03 | 1.19 | - |
| " 6 | - | 61.0 | 1.98 | - | 0.21 |
| " 7 | - | 0 | 2.03 | - | 0.08 |
| " 8 | 0.67 | 85.5 | 2.36 | 1.12 | - |
| " 9 | 3.88 | 80.1 | 2.05 | 1.18 | - |
| Comp. Example 1 | - | - | - | - | - |
| " 2 | 0.64 | 83.8 | 2.37 | 1.13 | - |
| " 3 | - | - | - | - | - |
| " 4 | - | 85.4 | - | 1.11 | 2.14 |
| " 5 | - | 85.8 | - | 1.11 | 2.20 |
| " 6 | - | 86.2 | - | 1.10 | 2.09 |

* Measured in decalin at 135°C

Table 3

| | Transition metal compound (mmol/ℓ) | Aluminoxane (mmol/ℓ) | Alkyl aluminum | | Total pressure ($kg/cm^2$-G) | Comonomer | |
|---|---|---|---|---|---|---|---|
| | | | Type | (mmol/ℓ) | | Type | (ml) |
| Example 10 | $1 \times 10^{-3}$ | 0.5 | $(i\text{-}Bu)_3Al$ | 0.25 | 8 | 4-methyl-1-pentene | 750 |
| " 11 | " | " | " | " | " | 1-hexene | 650 |
| " 12 | " | 1 | " | 0.5 | " | 4-methyl-1-pentene | 750 |
| " 13 | " | 0.5 | isoprenyl aluminum | 0.25 | " | " | " |
| Comp. Example 7 | $1 \times 10^{-3}$ | 0.5 | - | - | 8 | 4-methyl-1-pentene | 750 |

- to be continued -

Table 3 (continued)

| | Polymerization temperature (°C) | Polymerization time (hr) | Amount yielded (g) | Activity (g-polymer/mmol-Zr) |
|---|---|---|---|---|
| Example 10 | 45 | 1 | 33.1 | 33100 |
| " 11 | " | " | 35.4 | 35400 |
| " 12 | " | " | 48.7 | 48700 |
| " 13 | " | " | 18.3 | 18300 |
| Comp. Example 7 | " | " | 2.9 | 2900 |

Table 4

| | MFR (g/10 min.) | Density (g/cm$^3$) | $\bar{M}w/\bar{M}n$ | n-decane-soluble portion at room temperature (wt %) |
|---|---|---|---|---|
| Example 10 | 0.55 | 0.901 | 2.92 | 1.8 |
| " 11 | 0.46 | 0.898 | 2.88 | 2.1 |
| " 12 | 0.59 | 0.904 | 2.98 | 2.0 |
| " 13 | 1.03 | 0.902 | 3.02 | 2.3 |
| Comp. Example 7 | 0.82 | 0.910 | 2.90 | 0.72 |

EXAMPLE 14

A 1-liter continuous polymerization reactor was continuously fed with 500 ml/hr of toluene, 0.5 milligram-atom/hr, calculated as aluminum atom, of the aluminoxane synthesized in Example 1, and 5 x $10^{-3}$ millimole/hr of bis(cyclopentadienyl)zirconium dichloride, and simultaneously, 150 liters/hr of ethylene, 100 liters/hr of propylene and 1.2 g/hr of 5-ethylidene-2-norbornene (ENB) were continuously fed into the reactor, and polymerized at 20 °C under atmospheric pressure with a residence time of 1 hour and a polymer concentration of 15 g/liter. The resulting polymerization product was worked up as in Example 1 to give an ethylene/propylene/EMB copolymer having an MFR of 2.25 g/10 min., an ethylene content, measured by $^{13}$C-NMR, of 86.9 mole %, an $\bar{M}w/\bar{M}n$ of 2.45, and an iodine value of 11.

COMPARATIVE EXAMPLE 8

Example 1 was repeated except that in the polymerization of Example 1, triisobutyl aluminum was not used, the amount of the aluminoxane was changed to 2.5 milligram-atoms calculated as aluminum atom, and the polymerization was carried out for 30 minutes. There was obtained 22.8 g of a polymer having an MFR of 1.63 g/10 min., an ethylene content of 82.8 mole %, an $\overline{M}w/\overline{M}n$ of 1.92 and a B value of 1.14.

EXAMPLE 15

Pre-mixing of the catalyst components [A] and [B]

To a 100 ml glass flask fully purged with nitrogen, 4.7 ml of a toluene solution (Al 0.85 mole/liter) of the aluminoxane synthesized in Example 1, 2.4 ml of a toluene solution (Zr 0.01 mole/liter) of bis(cyclopentadienyl)zirconium dichloride and 12.9 mol of toluene were added, and stirred at 22 °C for 1 hour to give a yellow transparent solution.

Polymerization

A 2-liter stainless steel autoclave fully purged with nitrogen was charged with 500 ml of hexane, 500 ml of 4-methyl-1-pentene and 0.5 millimole of triisobutyl aluminum, and heated to 47 °C. Thereafter, 2.5 ml of the solution prepared as above was forced into the autoclave under ethylene pressure, and the polymerization was started. Ethylene was continuously fed so as to maintain the total pressure at 6.9 bar-G (7 $kg/cm^2$-G), and the polymerization was carried out at 50 °C for 1 hour. There was obtained 71.4 g of a polymer having an MFR of 1.08 g/10 min., a density of 0.902 $g/cm^3$, an $\overline{M}w/\overline{M}n$ of 2.90 and a decane-soluble portion weight fraction at room temperature of of 1.5 % by weight.

EXAMPLE 16

Pre-mixing of catalyst components [A] and [B]

The procedure described in Example 15 was repeated except that 4.8 ml of a toluene solution (Zr 0.01 mole/liter) of bis(cyclopentadienyl)zirconium dichloride and 10.5 ml of toluene were used.

Polymerization

Example 15 was repeated except that 1.25 ml of the solution prepared above was used. There was obtained 46.1 g of a polymer having an MFR of 0.82 g/min., a density of 0.904 $g/cm^3$, an $\overline{M}w/\overline{M}n$ of 2.86 and a decane-soluble portion weight fraction at room temperature of 1.3 % by weight.

EXAMPLE 17

Pre-mixing of catalyst components [A] and [B]

In Example 15, 12.0 ml of a toluene solution (Zr 0.04 mole/liter) of bis(cyclopentadienyl)zirconium dichloride, 6.3 ml of a toluene solution (Al 2.55 moles/liter) of the aluminoxane synthesized in Example 1 and 1.7 ml of toluene were stirred at 22 °C for 30 minutes to give a deep yellow transparent solution.

Polymerization

Example 15 was repeated except that 0.125 ml of the solution prepared above and 1.0 millimole of triisobutyl aluminum were used and the polymerization was carried out at 60 °C for 1 hour. There was obtained 38.5 g of a polymer having an MFR of 1.09 g/10 min., a density of 0.902 $g/cm^3$, an $\overline{M}w/\overline{M}n$ of 2.82 and a decane-soluble portion weight fraction at room temperature of 1.3 % by weight.

EXAMPLE 18

Polymerization

A 2-liter stainless steel autoclave fully purged with nitrogen was charged with 500 ml of toluene, 1 milligram-atom, calculated as aluminum atom, of the aluminoxane synthesized in Example 1, and 2 millimoles of triisobutyl

aluminum.

Furthermore, propylene was introduced at 4.9 bar-G (5 $kg/cm^2$-G) at 30 °C. Thereafter, the introduction of propylene was stopped, and the mixture was cooled to -10 °C. Then, 1 x $10^{-3}$ millimole of ethylenebis(indenyl)zirconium dichloride was introduced into the autoclave, and the polymerization was started. By performing the polymerization at -10 °C for 6 hours, 44.2 g of a polymer was obained.

COMPARATIVE EXAMPLE 9

Example 18 was repeated except that in the polymerization of Example 18, triisobutyl aluminum was not used. There was obtained 2.4 g of a polymer.

EXAMPLE 19

Polymerization

A 2-liter stainless steel autoclave fully purged with nitrogen was charged with 250 ml of hexane and 750 ml of 4-methyl-1-pentene, and heated to 35 °C. Thereafter, 0.25 millimole of triisobutyl aluminum, 0.5 milligram-atom, calculated as aluminum atom, of the aluminoxane synthesized in Example 1, and 1 x $10^{-3}$ milligram-atom, as zirconium atom, of the catalyst component (A) synthesized in Example 6 were introduced. Subsequently, ethylene was introduced, and the polymerization was started. Ethylene was continuously fed so as to maintain the total pressure at 7.8 bar-G (8 $kg/cm^2$-G), and the polymerization was carried out at 45 °C for 1 hour. The polymerization product was worked up as in Example 1 to give 30.5 g of a polymer having an MFR of 0.62 g/10 min., a density of 0.902 $g/cm^3$, an $\overline{M}w/\overline{M}n$ of 2.98 and a decane-soluble portion weight fraction at room temperature of 1.9 % by weight.

EXAMPLE 20

Example 19 was repeated except that in the polymerization of Example 19, 750 ml of 1-hexene was used instead of 4-methyl-1-pentene. There was obtained 28.5 g of a polymer having an MFR of 1.01 g/10 min., a density of 0.891 $g/cm^3$ and an $\overline{M}w/\overline{M}n$ of 2.79.

COMPARATIVE EXAMPLE 10

Example 19 was repeated except that in the polymerization of Example 19, triisobutyl aluminum was not used. There was obtained 2.5 g of a polymer having an MFR of 1.94 g/10 min., a density of 0.908 $g/cm^3$, an $\overline{M}w/\overline{M}n$ of 2.95 and a decane-soluble portion weight fraction at room temperature of 1.1 % by weight.

## Claims

**1.** A process for polymerizing olefins, which comprises polymerizing or copolymerizing olefins in the presence of a catalyst composed of

(A) a solid catalyst component composed of a compound of a transition metal which compound is represented by formula (I)

$$R^1_k R^2_\ell R^3_m R^4_n Me \quad (I)$$

wherein $R^1$ represents a cycloalkadienyl group, $R^2$, $R^3$ and $R^4$ are identical or different and each represents a cycloalkadienyl group, an aryl group, an alkyl group, an aralkyl group, a halogen atom or a hydrogen atom, Me represents zirconium, titanium or hafnium, k is 1, 2, 3, or 4, 1, m and n are each 0, 1, 2 or 3, and k+1+m+n=4, and which compound is not supported on an inorganic carrier,

(B) an aluminoxane in a concentration of not more than 3 milligram-atoms/litre as aluminum atom in the reaction system, and

(C) an organoaluminium compound having a hydrocarbon group other than n-alkyl groups.

**2.** A process according to claim 1 wherein the aluminoxane is represented by formula (II)

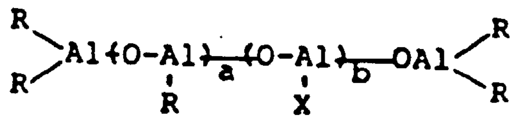 (II)

wherein R is a hydrocarbon group, X is a halogen atom, and a and b, independently from each other, represent a number of 0 to 80 with the proviso that a and b are not simultaneously zero, or by formula (III)

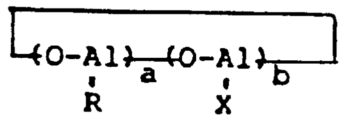 (III)

wherein R, X, a and b are as defined with regard to formula (II).

3. A process according to claim 1 or 2 wherein the organic group of the organoaluminum compound is a branched alkyl group, a cycloalkyl group or an aryl group.

## Patentansprüche

1. Verfahren zum Polymerisieren von Olefinen, umfassend das Polymerisieren oder Copolymerisieren von Olefinen in Gegenwart eines Katalysators, zusammengesetzt aus

(A) einer festen Katalysatorkomponente, zusammengesetzt aus einer Verbindung eines Übergangsmetalls, die angegeben wird durch die Formel (I)

$$R^1_k R^2_\ell R^3_m R^4_n Me \qquad (I)$$

wobei $R^1$ eine Cycloalkadienylgruppe bedeutet, $R^2$, $R^3$ und $R^4$ gleich oder verschieden sind und jeweils eine Cycloalkadienylgruppe, eine Arylgruppe, eine Alkylgruppe, eine Aralkylgruppe, ein Halogenatom oder ein Wasserstoffatom bedeuten, Me Zirkonium, Titan oder Hafnium bedeutet, k 1, 2, 3 oder 4 ist, l, m und n jeweils 0, 1, 2 oder 3 sind und k+l+m+n=4 ist und wobei die Verbindung nicht auf einem anorganischen Träger vorliegt,
(B) einem Aluminoxan in einer Konzentration von nicht mehr als 3 mg Atom/l als Aluminiumatom in dem Reaktionssystem, und
(C) einer Organoaluminiumverbindung mit einer anderen Kohlenwasserstoffgruppe als einer n-Alkylgruppe.

2. Verfahren nach Anspruch 1, wobei das Aluminoxan angegeben wird durch die Formel (II)

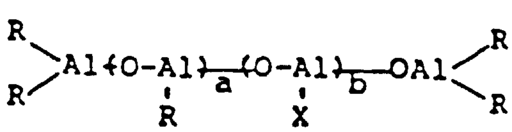 (II)

wobei R eine Kohlenwasserstoffgruppe ist, X ein Halogenatom ist und a und b unabhängig voneinander eine Zahl von 0 bis 80 bedeuten, mit der Maßgabe, daß a und b nicht gleichzeitig Null sind, oder durch die Formel (III)

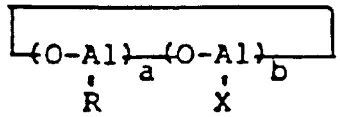

(III)

wobei R, X, a und b, wie in Bezug auf die Formel (II) angegeben, definiert sind.

**3.** Verfahren nach Anspruch 1 oder 2, wobei die organische Gruppe der Organoaluminiumverbindung eine verzweigte Alkylgruppe, eine Cycloalkylgruppe oder eine Arylgruppe ist.

## Revendications

**1.** Procédé de polymérisation d'oléfines comprenant la polymérisation ou la copolymérisation d'oléfines en présence d'un catalyseur composé de

(A) d'un composant solide de catalyseur constitué d'un composé d'un métal de transition qui est représenté par la formule (I)

$$\text{(I)} \qquad R^1{}_kR^2{}_lR^3{}_mR^4{}_nMe$$

dans laquelle $R^1$ représente un radical cycloalcadiényle, $R^2$, $R^3$ et $R^4$, identiques ou différents, représentent chacun un groupe cycloalcandiényle, aryle, alkyle, aralkyle, un atome d'halogène ou d'hydrogène, Me représente un atome de zirconium, de titane ou d'hafnium, k vaut 1, 2 ou 3 ou 4, l, m et n valent chacun 0, 1, 2 ou 3 et k+l+m+n = 4, et lequel composé n'est pas porté par un support minéral,

(B) un aluminoxane en une concentration ne dépassant pas 3 milliéquivalents/litre d'atomes d'aluminium dans le système réactionnel, et

(C) un composé organoaluminique comportant un groupe hydrocarboné autre qu'un groupe n-alkyle.

**2.** Procédé selon la revendication 1 dans lequel l'aluminoxane est représenté par la formule (II)

(II)

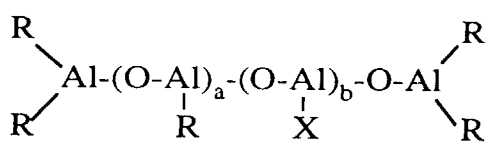

dans laquelle R représente un groupe hydrocarboné, X représente un atome d'halogène et a et b représentent, indépendamment l'un de l'autre, un nombre entre 0 et 80, avec la réserve que a et b ne soient pas simultanément égaux à 0, ou par la formule (III)

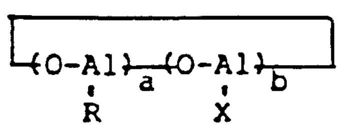

(III)

dans laquelle R, X, a et b sont définis comme pour la formle (II).

**3.** Procédé selon la revendication 1 ou 2 dans lequel le groupe organique du composé organoaluminique est un groupe alkyle ramifié, un groupe cycloalkyle ou un groupe aryle.